# EUROPÄISCHE PATENTANMELDUNG

(11) **EP 1 982 578 A2**
(43) Veröffentlichungstag der Anmeldung: **22.10.2008**
(21) Anmeldenummer: 08007583.1
(22) Anmeldetag: 18.04.2008
(51) Int. Cl.: A01G 17/02, A01G 17/08

(54) **Rebenbearbeitungseinrichtung**

(30) Priorität: 20.04.2007 DE 102007019187
(71) Anmelder: Rinklin, Willy, 79427 Eschbach (DE)
(72) Erfinder: Rinklin, Willy, 79427 Eschbach (DE)
(74) Vertreter: Maucher, Wolfgang

(57) **Zusammenfassung**

Die Erfindung betrifft eine Rebenbearbeitungseinrichtung (1) zur lösbaren Anordnung an einem Trägerfahrzeug (2), welche Einrichtung (1) mit einem eine Rebzeile übergreifenden Rahmen (3) versehen ist, dessen Schenkel (5) sich in Gebrauchsstellung an jeweils einer Seite der Rebzeile befinden, wobei an den Schenkeln (5) Aufrichtmittel (6) zur Aufrichtung von Rebtrieben angeordnet sind und wobei die Rebenbearbeitungseinrichtung (1) eine mit einem Klammerautomat (8) und mindestens einem Amboss (9) versehene Hefteinrichtung (7) aufweist, die beidseitig entlang der Rebzeile verlaufende Zugelemente (22) in vorbestimmbaren Abständen verbindet. Um eine Rebenbearbeitungseinrichtung (1) zur Verfügung zu haben, mit welcher mit geringem Aufwand ein zeitlich optimierter Klammervorgang funktionssicher und ohne Schädigung der Rebtriebe stattfinden kann, wird vorgeschlagen, dass der Klammerautomat (8) und der mindestens eine Amboss (9) der Hefteinrichtung (7) jeweils an einem starren Halteorgan (10) angeordnet sind, welches von je einem der Schenkel (5) des Rahmens (3) entgegen der Fahrtrichtung des Trägerfahrzeugs (2) schräg in Richtung der Rebzeile weisend angeordnet ist und der mindestens eine Amboss (9) über ein an dem zugeordneten Halteorgan (10) gelagertes Stellglied (11) bei einem Heftvorgang der Hefteinrichtung (7) in eine Gebrauchstellung auf den Klammerautomaten (8) zu bewegbar ist.

## Beschreibung

Die Erfindung betrifft eine Rebenbearbeitungseinrichtung zur lösbaren Anordnung an einem Trägerfahrzeug, welche Einrichtung mit einem eine Rebzeile übergreifenden Rahmen versehen ist, dessen Schenkel sich in Gebrauchsstellung an jeweils einer Seite der Rebzeile befinden, wobei an den Schenkeln Aufrichtmittel zur Aufrichtung von Rebtrieben angeordnet sind und wobei die Rebenbearbeitungseinrichtung eine mit einem Klammerautomat und mindestens einem Amboss versehene Hefteinrichtung aufweist, die beidseitig entlang der Rebzeile verlaufende Zugelemente in vorbestimmbaren Abständen verbindet, wobei der Klammerautomat und der mindestens eine Amboss der Hefteinrichtung jeweils an einem starren Halteorgan angeordnet sind, welches von je einem der Schenkel des Rahmens entgegen der Fahrtrichtung des Trägerfahrzeugs schräg in Richtung der Rebzeile weisend angeordnet ist.

Rebenbearbeitungseinrichtungen mit Hefteinrichtungen zum Aufbinden der Triebe von Rebstöcken einer Rebzeile sind in unterschiedlichen Ausführungen bereits bekannt, so etwa aus der DE 38 889 32 T2. Wie bei etlichen anderen Rebenbearbeitungseinrichtungen werden auch bei dieser zwei vertikale Schenkel der Einrichtung mittels einer Hydraulikeinrichtung zur Zeilenmitte geführt und sodann mittels der Hefteinrichtung die an den Rebzeilen entlang geführten Heftschnüre, Drähte oder dergleichen Zugelemente miteinander verbunden. Bei einem weiteren bekannten System werden horizontal angeordnete Arme in einer Schwenkbewegung wiederum mittels eines Hydraulikzylinders zur Zeilenmitte der Rebzeile geführt und die Zugelemente erneut unter Bewegung beider Arme miteinander verbunden. Derartige Rebenbearbeitungseinrichtungen sind beispielsweise aus den FR 2 315 845 A2, DE 25 12 342 C2 oder FR 2 723 289 A1 bekannt.

Nachteilig an den bekannten Systemen ist einerseits der durch die Bewegung von Schenkeln und Armen verursachte Zeitaufwand des Heftvorgangs selbst, da sich in dieser Zeit das Trägerfahrzeugs entlang der Rebzeile weiter vorwärts bewegt und so die Rebtriebe während des Heftvorgangs in Fahrtrichtung nach vorne gedrückt werden. Sie stehen bei Heftung demnach nicht in der gewünschten senkrechten Position. Zum anderen kann der Heftvorgang teilweise funktionssicher ausgeführt werden, da es passieren kann, dass durch im Moment des Heftens zwischen den Armen befindliche Rebtriebe der Heftvorgang gestört wird und die Klammer dann nicht an der gewünschten Position gesetzt wird.

Es ist daher die Aufgabe der vorliegenden Erfindung eine Rebenbearbeitungseinrichtung zur Verfügung zu stellen, mit welcher mit geringem Aufwand ein zeitlich optimierter Klammervorgang funktionssicher und ohne Schädigung der Rebtriebe stattfinden kann.

Diese Aufgabe wird gelöst durch eine Rebenbearbeitungseinrichtung der eingangs genannten Art, bei welcher der mindestens eine Amboss über ein an dem zugeordneten Halteorgan gelagertes Stellglied bei einem Heftvorgang der Hefteinrichtung in eine Gebrauchstellung auf den gegenüber seinem zugeordneten Halteorgan unbewegten Klammerautomaten zu bewegbar ist und dass die Bewegung des Ambosses eine Richtungskomponente entgegen der Fahrtrichtung des Trägerfahrzeugs aufweist.

Die erfindungsgemäße Rebenbearbeitungseinrichtung weist demnach eine bestimmte Hefteinrichtung auf, um den verschiedenen Anforderungen gerecht zu werden, wobei diese Hefteinrichtung aus zwei an Halteorganen angeordneten Komponenten, nämlich dem Klammerautomat und dem Amboss besteht. Der zumindest mit einem Klammermagazin zur Bevorratung an Klammern und mit einem betätigbaren Heftkopf versehene Klammerautomat wird bei dem Heftvorgang ebenso wenig bewegt wie der Schenkel, an dem Organ und Automat angeordnet sind. Ebensowenig werden der Schenkel bzw. das Organ, die dem Amboss zugeordnet sind, bei dem Heftvorgang bewegt. Lediglich das Stellglied, an welchem der Amboss in seine Gebrauchsstellung geführt wird, führt bei dem Heftvorgang eine Bewegung aus, so dass im Vergleich zum Stand der Technik viel geringere Massen zu bewegen sind, was wiederum dazu führt, dass einerseits ein deutlich geringerer apparativer Aufwand hierfür zu treiben ist und andererseits der gesamte Vorgang deutlich weniger Zeit beansprucht. Hierdurch kann wiederum eine Rebzeile in deutlich geringere Zeit auf diese Weise bearbeitet werden. Überdies wird durch die erfindungsgemäße Rebenbearbeitungseinrichtung zudem die Störanfälligkeit insgesamt verringert, da von den geringeren bewegten Massen erheblich weniger Erschütterungen auf das Trägerfahrzeug übertragen werden. Weiter weist erfindungsgemäß, um das Aufrichten der Rebtriebe durch die an den Schenkeln der Rebenbearbeitungseinrichtung angeordneten Aufrichtmittel möglichst nicht zu behindern, die Bewegung des Ambosses an dessen Stellglied eine Richtungskomponente entgegen der Fahrtrichtung des Trägerfahrzeugs auf. Bei dem Heftvorgang, bei welchem in dem Amboss die Klammer geformt wird und so die Zugelemente verbunden werden, könne durch die derart gegen die Fahrtrichtung ausgeführt Bewegung des Ambosses keine Rebtriebe umgedrückt werden.

Um den Amboss über sein Stellglied schnell und sicher in seine Gebrauchsstellung führen zu können, ist es zweckmäßig, wenn bei einer Ausbildung der Erfindung zur Bewegung des Stellglieds des Ambosses ein Stellantrieb, insbesondere ein elektrischer und/oder hydraulischer Antrieb, vorgesehen ist.

Die Bewegung des Ambosses aus seiner Ruhestellung in die dem Klammerautomat benachbarte Gebrauchsstellung für den Heftvorgang kann hierbei verschiedenen Trajektorien folgen, und kann beispielsweise in einer Linearbewegung, einer Schwenkbewegung oder einer Rotationsbewegung ausgeführt werden.

Bei einer anderen Ausführung der Rebenbearbeitungseinrichtung kann die Hefteinrichtung aber auch anders gestaltet, insbesondere das Stellglied des Ambosses der Hefteinrichtung mehrarmig, insbesondere zweiarmig, ausgebildet sein. Bei dieser Ausführung werden andere als lineare Bewegungen des Stellglieds mit dem Amboss ausgeführt, nämlich rotatorische Bewegungen, so dass an jedem Arm des Stellgliedes je ein Amboss angeordnet werden kann. Auch hierbei kann grundsätzlich die Bewegung mit einer Richtungskomponente entgegen der Fahrtrichtung des Trägerfahrzeugs stattfinden, so dass der Vorteil der nicht umgedrückten Triebe ebenfalls erreicht wird. Überdies verhindert die Drehbewegung gleichzeitig, dass sich im Moment des Heftvorgangs Triebe zwischen Klammerautomat und Amboss befinden. Weiter erlaubt der Einsatz mehrerer Ambosse auch eine erneute Beschleunigung des Heftvorgangs, wobei sogar bei starker Belaubung der zu bearbeitenden Rebzeile ein schnelles und sicheres Setzen der Klammern möglich ist. Prinzipiell ist die rotatorische Bewegung des Ambosses wiederum zwischen zwei möglichen Varianten zu unterscheiden, nämlich zwischen einer quasi kontinuierlichen Bewegung, die durch die Klammervorgang unterbrochen wird und einer Rotation die nur anlässlich des Klammervorgangs ausgelöst wird.

Zur besseren Koordination bzw. Synchronisation des Heftvorgangs mit der Bewegung des Trägerfahrzeugs kann es bei einer Ausführung der Erfindung von Vorteil sein, wenn an der Rebenbearbeitungseinrichtung eine Steuereinheit vorgesehen ist, welche die Bewegung des Ambosses der Hefteinrichtung, gegebenenfalls manipulierbar, steuert. Hierbei wird also die Stellglied- bzw. Ambossbewegung an die Geschwindigkeit des Trägerfahrzeugs angepasst und eine Regulation bzw. die Auslösung des Heftvorgangs kann entweder manuell oder automatisch erfolgen, etwa anhand eines einstellbaren Zeit-, Abstands- oder Geschwindigkeitswerts, wobei die manuelle Beeinflussung wichtig zur Anpassung an sich schnell ändernde örtliche Gegebenheiten ist.

Um den Heftvorgang mit dem Setzen der Klammer in dem Sinne noch sicherer zu machen, dass eine Anwesenheit von Rebtrieben zwischen den Komponenten der Hefteinrichtung weitestgehend vermieden wird, kann eine Ausführung der Rebenbearbeitungseinrichtung vorteilhafter an dem dem Amboss zugeordneten Stellglied mindestens ein Abweiseelement vorsehen, welches ein Eindringen von Rebtrieben in den lichten Abstand zwischen dem Klammerautomaten und dem Amboss in Gebrauchsstellung bei einem Heftvorgang verhindert.

Weiter könne in Rebzeilen in gewissen Abständen zu verschiedenen Zwecken Pfähle angeordnet sein, die den Heftvorgang behindern können, weswegen das Stellglied vorteilhaft in gewissen Grenzen verschwenkbar ist, um einem solchen Pfahl auszuweichen, und/oder mit einem Sensor versehen ist, der in Zusammenwirken mit der Steuereinheit ein Auslösen des Heftvorgangs verhindert oder verzögert.

Da auch ein schnelles Formen der Klammer bei Verbinden der Zugelemente der Geschwindigkeit des Heftvorgangs zuträglich ist, ist an der Rebenbearbeitungseinrichtung der Klammerautomat vorteilhafterweise mit einem, vorzugsweise pneumatischen, Betätigungsmittel versehen, welches bei dem Heftvorgang eine Bewegung einer Klammer auf den in Gebrauchsstellung befindlichen Amboss hin bewirkt.

Eine zweckmäßige Weiterbildung dieser Betätigungseinrichtung kann darin bestehen, dieses Betätigungsmittel als doppelt wirkenden pneumatischen oder hydraulischen Zylinder auszubilden, der mittels einer Ventilanordnung steuerbar ist. Hierbei handelt es sich bevorzugt um eine Kolben-ZylinderAnordnung, die in Klammerrichtung durch eine Gas- oder dergleichen Druckblase, beispielsweise eine Stickstoffblase, unter Druck gesetzt ist, und an dem Kolben in die entgegen gesetzte Richtung ein Gegendruck erzeugt wird. Durch Öffnen eines entsprechenden Ventils kann dieser Gegendruck schlagartig freigegeben werden, so dass der Kolben sich ebenso schlagartig in diese Klammerrichtung bewegt und selbst oder über einen Klammerschieber auf die betreffende Klammer einwirkt.

Eine andere Weiterbildung der erfindungsgemäßen Rebenbearbeitungseinrichtung ist derart ausgebildet, dass an den Schenkeln, insbesondere jeweils unterhalb der Elemente der Hefteinrichtung, entgegen der Fahrtrichtung auf die Rebezeile zu weisende Führungsteile angeordnet sind, die bewegliche Aufrichtmittel aufweisen. Hierdurch werden Rebtriebe, die in ihrer Länge kürzer sind und von den normalen Aufrichtmitteln der Rebenbearbeitungseinrichtung nicht erfasst werden, mitgenommen und es wird verhindert, dass sie unter den Zugelementen herausgleiten.

Bevorzugt sind die an den Führungsteilen befindlichen Aufrichtmittel als um das jeweilige Führungsteil umlaufende Triebbänder ausgebildet und verjüngen sich hierbei stärker zu der Rebzeile hin als die Halteorgane der Hefteinrichtung und können so wiederum ein Umdrücken von Rebtrieben durch die schräg in Richtung der Rebzeile gestellten Halteorgane der Hefteinrichtung vermeiden.

Besonders bevorzugt bilden bei einer Ausführung der Rebenbearbeitungseinrichtung die Zugelemente an den Führungsteilen geführt die Antreibseinrichtung der Aufrichtmittel. In besonders einfacher Weise ist also durch die an der Rebzeile ohnehin verlegten Zugelemente einen fahrgeschwindigkeitssynchronen Antrieb für die die Aufrichtmittel bildenden Triebbänder realisiert.

Um auch häufig geländebedingt auftretende Fahrfehler des Trägerfahrzeugs kompensieren und damit eine Schädigung von Rebtrieben vermeiden zu können, ist es zweckmäßig, die den Rebtrieben am nächsten kommenden Komponenten der Rebenbearbeitungseinrichtung, also die Führungsteile, mit einem Ausweichmechanismus zu versehen. Hierfür können die Führungsteile schwenkbeweglich gelagert und mit einem Dämpfungsmittel, beispielsweise einer Gasfeder, versehen sein.

Die Erfindung wird nachfolgend anhand von Ausführungsbeispielen in der Zeichnung näher erläutert. Es zeigen hierbei in teilweise stark schematisierter Darstellung die
- Fig.1: eine stirnseitige Ansicht einer ersten Ausführungsform der an einem Trägerfahrzeug angeordneten Rebenbearbeitungseinrichtung mit Hefteinrichtung;
- Fig.2: eine Draufsicht von oben auf eine Hefteinrichtung der Rebenbearbeitungseinrichtung mit Klammerautomat und linear bewegtem Amboss;
- Fig.3: eine Draufsicht von oben auf eine weitere Ausführung der an der Rebenbearbeitungseinrichtung angeordneten Hefteinrichtung, bei der der mehrarmige Amboss eine rotatorische Bewegung gegen den Uhrzeigersinn ausführt; und die
- Fig.4: eine Draufsicht von oben auf ein mit einem Dämpfungsmittel versehenes Führungsteil der Rebenbearbeitungseinrichtung mit an dem Führungsteil angebrachtem Zugelement als Antrieb des Aufrichtmittels.

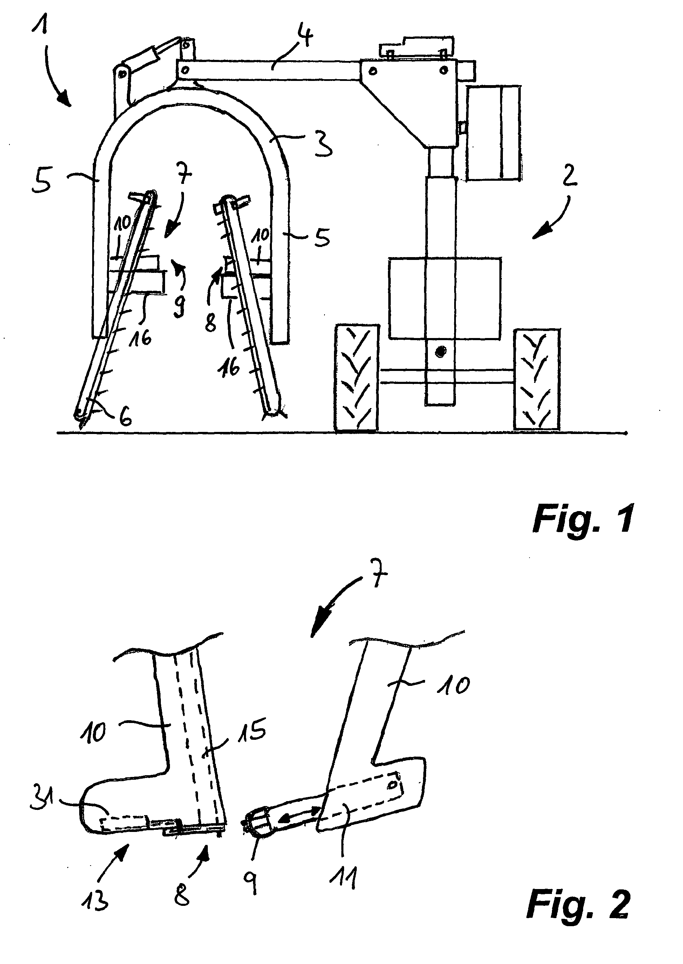

In der Fig.1 ist, in stirnseitiger Ansicht und in Bewegungsrichtung auf den Betrachter zu, eine im Ganzen mit 1 bezeichnete an einem Trägerfahrzeug 2 angeordnete Rebenbearbeitungseinrichtung zu erkennen. Die Rebenbearbeitungseinrichtung 1 ist mit einem an einem sogenannten Galgen 4 angeordneten Rahmen 3 versehen, der eine nicht weiter dargestellte Rebzeile übergreift. Die gesamte Rebenbearbeitungseinrichtung 1 ist über ihren Rahmen 3 an dem Trägerfahrzeug 2 verschwenkbar sowie seiten- und höhenverstellbar. In Gebrauchsstellung befinden sich die beiden Schenkel 5 des Rahmens 3 an jeweils einer Seite der nicht dargestellten Rebzeile und an den Schenkeln sind Aufrichtmittel 6 zur Aufrichtung von Rebtrieben angeordnet. Weiter weist die Rebenbearbeitungseinrichtung 1 eine Hefteinrichtung 7 auf, die mit einem Klammerautomat 8 und einem Amboss 9 versehen ist, um beidseitig an der Rebzeile verlaufende, hier nicht gezeigte Zugelemente zu verbinden. Der Klammerautomat 8 und der Amboss 9 der Hefteinrichtung 7 sind jeweils an einem starren Halteorgan 10 angeordnet, welches von je einem der Schenkel 5 des Rahmens 3 entgegen der Fahrtrichtung des Trägerfahrzeugs 2 schräg in Richtung der Rebzeile weisend angeordnet ist und der Amboss 9 ist, in der Fig.1 nicht erkennbar, über ein an dem zugeordneten Halteorgan 10 gelagertes Stellglied 11 bei einem Heftvorgang der Hefteinrichtung 7 in eine Gebrauchstellung auf den Klammerautomaten 8 zu bewegbar, wobei zur Bewegung des Stellgliedes 11 des Ambosses 9 ein aus Gründen der Übersichtlichkeit in keiner der Figuren dargestellter elektrischer und/oder hydraulischer Stellantrieb vorgesehen ist.

In der Fig.2 ist zu erkennen, dass der an dem teleskopierbaren Stellglied 11 angeordnete Amboss 9 der Hefteinrichtung 7 bei dem Heftvorgang eine Linearbewegung ausführt, die durch den Doppelpfeil angedeutet ist. Die Hefteinrichtung befindet sich hierbei an dem in Fahrtrichtung rückwärtigen Ende der Halteorgane 10, deren Abstand sich auf die Rebzeile hin verjüngt. Bei einem Heftvorgang wird der Amboss 9 linear angetrieben auf den Klammerautomaten 8 hin zubewegt und nachdem sich der Amboss 9 vor der Mündung des Klammerautomaten 8 befindet, eine Klammer an dem Amboss 9 umgeformt. Klar zu erkennen ist, dass die Bewegung des Ambosses 9 bei diesem Heftvorgang eine Richtungskomponente entgegen der Fahrtrichtung des Trägerfahrzeugs 2 aufweist.

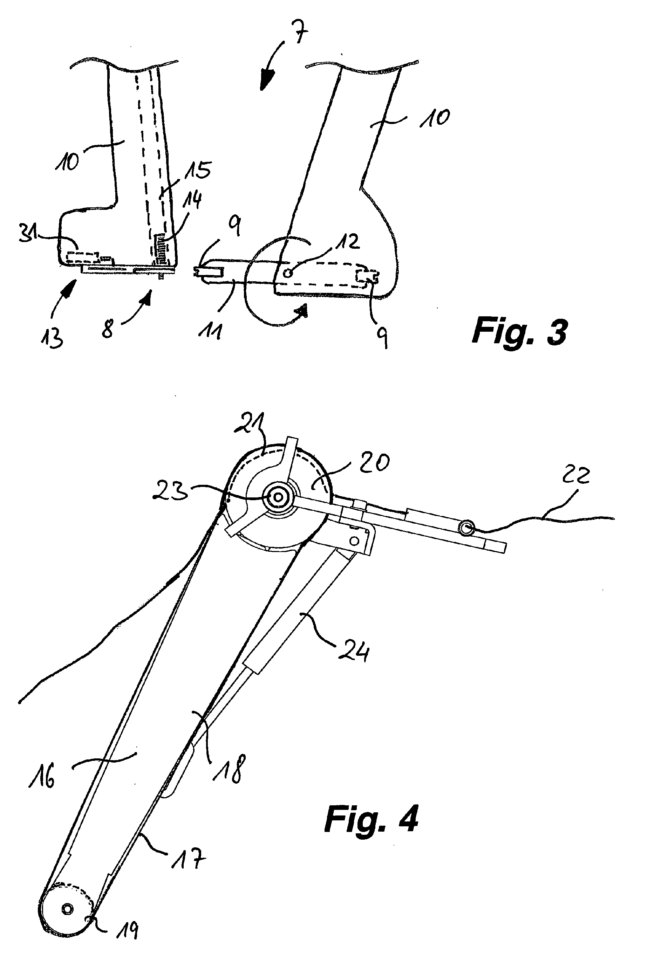

Sowohl in der Fig.2 wie in der Fig.3 ist die Steuereinheit, die die Bewegung des Ambosses manipulierbar steuert, nicht gezeigt. Auch in der Fig.3 werden die Ambosse 9 durch ein Stellglied 11 vor die Mündung des Klammerautomaten 8 bewegt, allerdings ist hier das Stellglied 11 mehrarmig, nämlich zweiarmig, ausgebildet, so dass es angetrieben eine durch den Pfeil angedeutete Rotationsbewegung gegen den Uhrzeigersinn um einen Anlenkpunkt 12 ausführt. Weiter ist, wie schon in der Fig.2 an dem Klammerautomaten 8 ein pneumatisches Betätigungsmittel 13 in Form eines doppelt wirkenden Zylinders zu erkennen, der bei einem Heftvorgang eine Bewegung einer zuvor in einem Magazin 15 befindlichen Klammer 14 auf den in Gebrauchsstellung befindlichen Amboss bewirkt. Der auf den Kolben der Anordnung wirkende Druck wird dabei durch ein Gasreservoir 31 zur Verfügung gestellt, der zum Spannen dieser Anordnung notwendige Gegendruck durch eine nicht weiter dargestellte pneumatische Einrichtung.

Bereits in der Fig.1 erkennbar unter den Elementen der Hefteinrichtung 7 angeordnet und in der Fig.4 genauer dargestellt ist ein entgegen der Fahrtrichtung auf die Rebzeile zuweisendes Führungsteil 16 mit beweglichen Aufrichtmitteln 17, die aus einem um das Gestell 18 des Führungsteils an Rollen 19, 20 umlaufendes Triebband bestehen. Das an dem Führungsteil eingefädelte, in eine Nut 21 der größeren Rolle 20 des Führungsteils laufende und die Rolle dabei mitnehmende Zugelement 22 bildet hierbei den Antrieb der Aufrichtmittel 17. Das Führungsteil 16 ist hierbei an dem Anlenkpunkt 23 schwenkbar gelagert und kann durch Auslenkung einer Beaufschlagung von Rebseite ausweiche. Um eine solche Bewegung nicht zu schlagartig geschehen zu lassen, ist das Führungsteil 17 überdies an seiner der Rebzeile abgewandten Seite mit einem als Gasdämpfer ausgebildeten Dämpfungsmittel 24 versehen.

## Patentansprüche

1. Rebenbearbeitungseinrichtung zur lösbaren Anordnung an einem Trägerfahrzeug, welche Einrichtung mit einem eine Rebzeile übergreifenden Rahmen versehen ist, dessen Schenkel sich in Gebrauchsstellung an jeweils einer Seite der Rebzeile befinden, wobei an den Schenkeln Aufrichtmittel zur Aufrichtung von Rebtrieben angeordnet sind und wobei die Rebenbearbeitungseinrichtung eine mit einem Klammerautomat und mindestens einem Amboss versehene Hefteinrichtung aufweist, die beidseitig entlang der Rebzeile verlaufende Zugelemente in vorbestimmbaren Abständen verbindet, wobei der Klammerautomat und der mindestens eine Amboss der Hefteinrichtung jeweils an einem starren Halteorgan angeordnet sind, welches von je einem der Schenkel des Rahmens entgegen der Fahrtrichtung des Trägerfahrzeugs schräg in Richtung der Rebzeile weisend angeordnet ist, **dadurch gekennzeichnet, dass** der mindestens eine Amboss (9) über ein an dem zugeordneten Halteorgan (10) gelagertes Stellglied (11) bei einem Heftvorgang der Hefteinrichtung (7) in eine Gebrauchstellung auf den gegenüber seinem zugeordneten Halteorgan unbewegten Klammerautomaten (8) zu bewegbar ist und dass die Bewegung des Ambosses (9) eine Richtungskomponente entgegen der Fahrtrichtung des Trägerfahrzeugs (2) aufweist.

2. Rebenbearbeitungseinrichtung nach Anspruch 1, **dadurch gekennzeichnet, dass** zur Bewegung des Stellglieds (11) des Ambosses (9) ein Stellantrieb, insbesondere ein elektrischer und/oder hydraulischer Antrieb, vorgesehen ist.

3. Rebenbearbeitungseinrichtung nach Anspruch 1 oder 2, **dadurch gekennzeichnet, dass** der Amboss (9) bei dem Heftvorgang eine Linearbewegung, eine Schwenkbewegung oder eine Rotationsbewegung ausführt.

4. Rebenbearbeitungseinrichtung nach einem der Ansprüche 1 bis 3, **dadurch gekennzeichnet, dass** das Stellglied (11) des Ambosses (9) der Hefteinrichtung (7) mehrarmig, insbesondere zweiarmig, ausgebildet ist.

5. Rebenbearbeitungseinrichtung nach einem der vorhergehenden Ansprüche, **dadurch gekennzeichnet, dass** an dieser eine Steuereinheit vorgesehen ist, welche die Bewegung des Ambosses (9), gegebenenfalls manipulierbar, steuert.

6. Rebenbearbeitungseinrichtung nach einem der vorhergehenden Ansprüche, **dadurch gekennzeichnet, dass** an dem dem Amboss (9) zugeordneten Stellglied (11) mindestens ein Abweiseelement vorgesehen ist, welches ein Eindringen von Rebtrieben in den lichten Abstand zwischen dem Klammerautomaten (8) und dem Amboss (9) in Gebrauchsstellung bei einem Heftvorgang verhindert.

7. Rebenbearbeitungseinrichtung nach einem der vorhergehenden Ansprüche, **dadurch gekennzeichnet, dass** das Stellglied (11) in gewissen Grenzen verschwenkbar ist und/oder mit einem Sensor versehen ist.

8. Rebenbearbeitungseinrichtung nach einem der vorhergehenden Ansprüche **dadurch gekennzeichnet, dass** der Klammerautomat (8) mit einem, vorzugsweise pneumatischen, Betätigungsmittel (13) versehen ist, welches bei dem Heftvorgang eine Bewegung einer Klammer (14) hin auf den in Gebrauchsstellung befindlichen Amboss (9) bewirkt.

9. Rebenbearbeitungseinrichtung nach Anspruch 8, **dadurch gekennzeichnet, dass** das Betätigungsmittel (13) als doppelt wirkender pneumatischer oder hydraulischer Zylinder ausgebildet ist, der mittels einer Ventilanordnung steuerbar ist.

10. Rebenbearbeitungseinrichtung nach einem der vorhergehenden Ansprüche, **dadurch gekennzeichnet, dass** an den Schenkeln (5), insbesondere jeweils unterhalb der Elemente der Hefteinrichtung (7), entgegen der Fahrtrichtung auf die Rebezeile zu weisende Führungsteile (16) angeordnet sind, die bewegliche Aufrichtmittel (17) aufweisen.

11. Rebenbearbeitungseinrichtung nach Anspruch 10, **dadurch gekennzeichnet, dass** die Aufrichtmittel (17) als um das jeweilige Führungsteil (16) umlaufende Triebbänder ausgebildet sind.

12. Rebenbearbeitungseinrichtung nach Anspruch 10 oder 11, **dadurch gekennzeichnet, dass** die Führungsteile (16) sich stärker zu der Rebzeile hin verjüngen als die Halteorgane (10) der Hefteinrichtung (7).

13. Rebenbearbeitungseinrichtung nach einem der Ansprüche 10 bis 12, **dadurch gekennzeichnet, dass** die Zugelemente (22) an den Führungsteilen (16) geführt die Antreibseinrichtung der Aufrichtmittel (17) bilden.

14. Rebenbearbeitungseinrichtung nach einem der Ansprüche 10 bis 13, **dadurch gekennzeichnet, dass** die Führungsteile (16) schwenkbeweglich gelagert und mit einem Dämpfungsmittel (24) versehen sind.
